# EUROPEAN PATENT SPECIFICATION

(11) **EP 1 361 101 B1**
(45) Date of publication and mention of the grant of the patent: **24.01.2007**
(21) Application number: 03009675.4
(22) Date of filing: 30.04.2003
(51) Int. Cl.: B60K 17/346

(54) **A compact four-wheel drive system for motor vehicles**
Kompakter Allradantrieb für Kraftfahrzeuge
Transmission compacte à quatre roues motrices pour véhicules à moteur

(30) Priority: 07.05.2002 IT TO20020372
(43) Date of publication of application: 12.11.2003
(73) Proprietor: Faldella, Roberto, 10132 Torino (IT)
(72) Inventor: Faldella, Roberto, 10132 Torino (IT)
(74) Representative: Di Francesco, Gianni

(56) References cited:
- EP-A- 0 254 688
- EP-A- 0 413 436
- EP-A- 0 553 670
- EP-A- 0 962 349
- IT-B- 1 189 667
- US-A- 4 601 359

## Description

The present invention relates to transmission systems for motor vehicles in which the engine and the gear shift are set in a transverse direction with respect to the direction of travel of the vehicle.

More precisely, the invention relates to a transmission system of the type comprising:
- a rear differential for transmission of motion to the rear wheels of the vehicle;
- a central differential constituted by a differential of the type with limited slip, made up of:
   - a gear-train carrier rigidly connected to the ring gear for final gearing-down of the gear shift;
   - a crown wheel connected to the front differential by means of a grooved tubular shaft;
   - another crown wheel, grooved on the inside and is connected by means of another tubular shaft, which is also grooved, to a support which surrounds said front differential;
- a ring bevel gear connected to the aforesaid crown wheel by means of the aforesaid annular support; and
- a bevel pinion which meshes with said ring bevel gear and is kinematically connected to the rear differential;
and in which the central differential is contained within the area of the gear shift usually reserved to the front differential, whereas the front differential is arranged in a separate casing, which is set aligned with the output of the gear shift and is rigidly connected thereto.

A transmission system of the above type is described and illustrated in the Italian patent application No. 6740786. A further transmission system of the above type is described and illustrated in US-A-4601359. In the transmission system of the Italian patent which is considered as being known, the central differential is constituted by an epicyclic device, where the difference in speed between the front axle and the rear axle is limited by a viscous joint or alternatively by a hydraulic joint or an electronically-controlled joint. In addition, the front differential and the support of the crown wheel and pinion are connected, respectively, to the gear-train carrier and to the central gear of the epicyclic device by means of hollow shafts, which are integral with the gear-train carrier and with the central gear, respectively.

The main characteristics of the present invention lie in the fact that, instead of the epicyclic device, a limited-slip differential is used, characterized in that it has two crown wheels which are different from one another as regards the diameter and the internal grooving. Since said differential is of the limited-slip type, it also performs the function typical of the viscous joint or hydraulic joint or electronic joint; in addition, the crown wheels are connected to the support of the ring bevel gear and to the front differential by means of hollow shafts that are grooved at the two ends, instead of being integral with the crown wheels.

The advantage lies, therefore, in the fact that costs, weight, and size are considerably reduced. In addition, the limited-slip differential enables higher characteristics of motive power as compared to a viscous or hydraulic joint.

The limited-slip joint is preferably of the Torsen type, but it is also advantageously possible to use a Suretrac differential, or lamella differential or a Powr-Trak differential or yet other differentials that are currently manufactured.

A further advantage is represented by the fact that front differential with bevel gear and central differential are contained in two single separated casings fixed together.

A further element of advantage of the present invention is represented by the possible use of an oil seal, in order to separate at least partially lubrication of the gear shift from lubrication of the power take-off, and of a roller bearing set in an appropriate position, in order to improve centring of the ring bevel gear.

The invention will now be described in detail with reference to the attached drawings, which are provided merely by way of non-limiting example and in which:
- Figure 1 is a schematic view of the transmission system according to the prior art; and
- Figure 2 is a partial schematic cross-sectional view of the transmission system according to the invention.

With reference to the figures, number 1 designates an internal-combustion engine set, in the case in point, in the front part of the vehicle, in a transverse direction with respect to the direction of travel. The engine 1 is equipped with a speed-gear shift 2, either of a manual type or of an automatic type. Also the primary shaft of the gear shift is set in a transverse direction with respect to the direction of travel of the vehicle.

The reference number 3 designates a front differential to which motion is transmitted by a gear 4 fixed to the secondary shaft 5 of the gear shift, by means of the limited-slip differential 5a, which, as will emerge more clearly from what follows, functions as central differential. The front differential 3 transmits the torque to the front wheels of the vehicle via two axle shafts 6a and 6b.

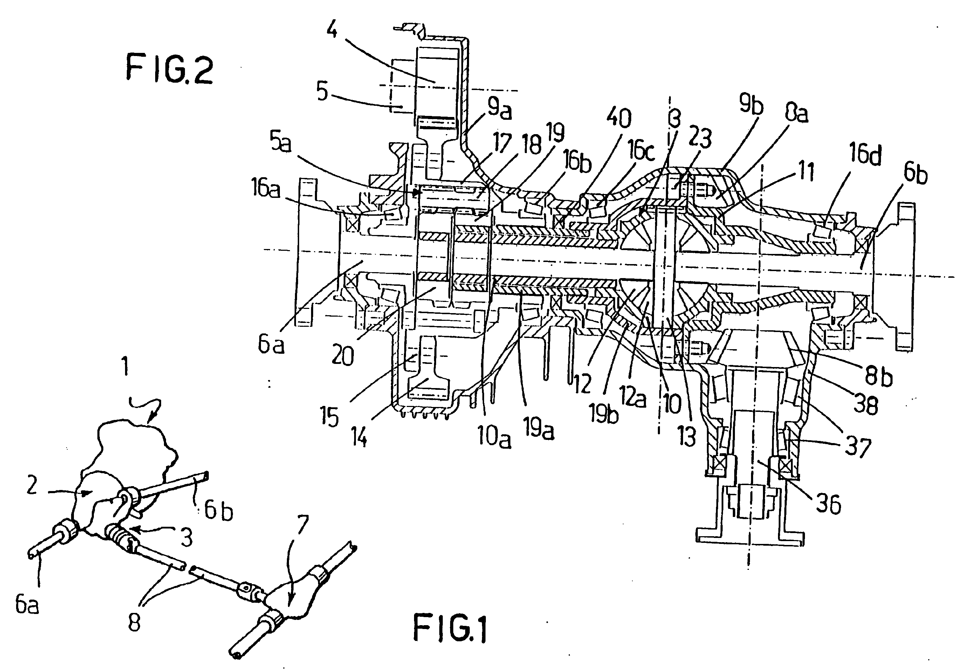

As is shown in Figure 1, the transmission system further includes a rear differential 7, which transmits motion to the rear wheels of the vehicle and is connected by means of a transmission shaft 8 and the crown wheel and pinion 8a-8b to the differential 5a, which functions as central differential in the way described in detail hereinafter.

The front differential 3 and the central differential 5a are both contained (see Figure 2) in casings which are fixed to the gear shift. In greater detail, the central differential 5a is contained in the part 9a of the gearbox, which is usually reserved to the front differential, whereas the front differential 3 is contained in the separate casing 9b (the so-called "power take-off" or "PTO") fixed to the casing 9a. In this way, when it is desired to transform the four-wheel drive system into a transmission system initially designed just for the front-wheel drive, it is not necessary to modify the gearbox, this making the operations necessary for said transformation simpler and less costly.

The differential 3, which is of a known type, has the gear-train carrier 10 connected to the tubular shaft 10a, within which there rotates the axle shaft 6a which transmits motion to the left-hand front wheel, just as the axle shaft 6b rotates within the support 11 and transmits motion to the right-hand front wheel. At the internal ends of the two axle shafts 6a and 6b there are mounted two ring bevel gears 12 which mesh with the planetary gears 12a, which are in turn driven by the pin 11 fixed in the gear-train carrier 10.

The reference number 14 designates a ring gear, which, on the one hand, meshes with the pinion 4 of the secondary shaft 5 of the gear shift, and on the other hand is supported - via the external casing of the central differential 5a, to which it is connected by means of the screws 15 - by the conical-roller bearings 16a and 16b.

As already specified, the limited-slip differential 5a functions as central differential and is capable of distributing the torque between the front differential 3 and the rear differential 7. The limited-slip differential 5a, which is not described in detail herein in so far as it is a Torsen differential, of a known type, comprises a gear-train carrier 17, planetary gears 18 and two crown wheels 19 and 20, which, as has already been said, are different from one another as regards the diameter and the internal grooving. The crown wheel 19 is connected by means of a groove to the hollow shaft 19a, whilst the crown wheel 20 is connected, by means of the grooved shaft 10a, to the gear-train carrier 10 of the front differential 3. The hollow shaft 19a is coaxial and external to the hollow shaft 10a.

The grooved hollow shaft 19a, which is connected on one hand to the crown wheel 19 of the central differential 5a, is connected on the other hand to the support 19b of the ring bevel gear 8a, said support being located in the casing 9b and surrounding the gear-train carrier 10 of the front differential 3. The element 19b, together with the support 11 to which it is fixed by means of the screws 23, is in turn supported by the bearings 16c and 16d within the casing 9b.

Fixed on the supports 19b and 11 is the ring bevel gear 8a, which meshes with the bevel pinion 8b for transferring motion to the rear differential 7. The pinion 8b is fixed to the shaft 36, which is supported by the bearings 37 within the protuberance 38 of the casing 9b. The shaft 36 is connected to the rear differential 7 by means of the transmission shaft 8, which is provided with constant-velocity joints.

In use, motion is transmitted to the axle shafts 6a and 6b of the front wheels by the pinion 4 of the secondary shaft through the corona 14, the gear-train carrier 17 and the planetary gears 18 of the central differential Sa, the crown wheel 20, the hollow shaft 10a, and the gear-train carrier 10 of the front differential 3.

At the same time, motion is transmitted to the rear axle by means of the pinion 4, the corona 14, the gear-train carrier 17, the planetary gears 18, the crown wheel 19, the hollow shaft 19a, the support 19b, the ring bevel gear 8a, the pinion 8b, the shaft 36, the transmission shaft 8, and the rear differential 7.

Since the differential 5a is a limited-slip differential, it prevents or, more precisely, limits relative sliding of the front axle with respect to the rear axle of the vehicle, and vice versa, thus guaranteeing motive power together with good vehicle handling.

It should be noted that the limited-slip differential 5a could be constituted, instead of by a TORSEN, by a SURETRAC, a POWR-TRAK, a lamella differential or by any other known type of limited-slip differential.

In addition, lubrication of the system may be improved by setting between the casing 9a and the casing 9b the oil seal 40, which rests on the hollow shaft 19a and prevents, during curving, excessive amounts of oil from being displaced from the casing 9a to the casing 9b, or vice versa. Furthermore, correct positioning of the ring bevel gear 8a may be improved using a roller bearing (not illustrated herein), comprised between the external walls of the casing 9b and the support 19b of the ring bevel gear 8a.

## Claims

1. A transmission system for motor vehicles in which the engine and the gear shift are set in a transverse direction with respect to the direction of travel of the vehicle, said system comprising:
- a front differential (3) having a gear-train carrier (10), driven by the pinion (4) of the secondary shaft of the gear shift for transferring motion to the axle shafts (6a, 6b) of the front wheels of the vehicle;
- a rear differential (7) for transmission of motion to the rear wheels of the vehicle; -a central differential (5a) constituted by a limited-slip differential, in which:
a) the gear-train carrier (17) is fixed to the corona (14), which meshes with the pinion (4) of the secondary shaft; and
b) one crown wheel (19) is connected to the support (19b) of the ring bevel gear (8a) for transmission to the rear, and the other crown wheel (20) is connected to the gear-train carrier (10) of the front differential (3), said crown wheels having different diameters and internal grooving;
- a ring bevel gear (8a), which is rigidly fixed to the supports (19b and I1);
- a bevel pinion (8b), which meshes with said ring bevel gear (8a) and is kinematically connected to the rear differential;
- means for connecting one crown wheel (19) to the ring bevel gear (8a) and for connecting the other crown wheel (20) to the front differential (3); and
- means for limiting relative sliding of the front axle with respect to the rear axle, and vice versa;
and in which said limited-slip differential (5a) is inserted in the part of the gear shift (9a), which is usually provided for the front differential, whereas the front differential is inserted in a specific casing (9b), which is adjacent and is fixed to the gearbox (9a);
said system being **characterized in that** said means for connecting the crown wheels (19 and 20), one (19) to the support (19b) of the ring bevel gear (8a) and the other (20) to the gear- train carrier (10) of the front differential (3), are constituted by two co-axial hollow shafts (19a and 10a), which are grooved at their ends, **in that** said means for preventing relative sliding of the two axles are constituted by the limited-slip differential (5a) ***and in that**, in the purpose to simplify the construction of the system, said front differential (3) with said bevel gear (8a) and said central differential (5a) are contained in two single separated casings (9a,9b) fixed together.*

2. The system according to Claim 1, **characterized in that** the limited-slip differential is of the Torsen type.

3. The system according to Claim 1, **characterized in that** the limited-slip differential is of the Suretrac type.

4. The system according to Claim 1, **characterized in that** the limited-slip differential is of the Powr-Trak type.

5. The system according to Claim 1, **characterized in that** the inside of the casings (9a and 9b) is separated by an oil seal (40).

6. The system according to Claim 1, **characterized in that** set between the support (19b) of the ring bevel gear (8a) and the wall of the casing (9b) is a bearing designed to improve centring of the ring bevel gear.

## Patentansprüche

1. Ein Getriebesystem für Kraftfahrzeuge, bei dem der Motor und die Gangschaltung in einer diagonalen Richtung in Bezug auf die Fahrtrichtung des Fahrzeuges angeordnet sind, wobei das System umfasst:
- ein vorderes Differential (3) mit einem Getriebezugträger (10), angetrieben durch das Ritzel (4) der Vorgelegewelle der Gangschaltung für die Übertragung von Bewegung auf die Achswellen (6a, 6b) der Vorderräder des Fahrzeuges,
- ein hinteres Differential (7) für die Übertragung von Bewegung auf die Hinterräder des Fahrzeuges,
- ein zentrales Differential (5a), gebildet durch ein Selbstsperrdifferential, bei dem
a) der Getriebezugträger (17) an der Korona (14) befestigt ist, die mit dem Ritzel (4) der Vorgelegewelle im Eingriff steht; und
b) ein Antriebskegelrad (19) mit dem Träger (19b) des Ringkegelradgetriebes (8a) für die Übertragung auf das hintere Differential verbunden ist, und das andere Antriebskegelrad (20) mit dem Getriebezugträger (10) des vorderen Differentials (3) verbunden ist, wobei die Antriebskegelräder unterschiedliche Durchmesser und Innenauskehlungen aufweisen;
- ein Ringkegelradgetriebe (8a), das starr an den Trägern (19b und 11) befestigt ist;
- ein Kegelradritzel (8b), welches mit dem Ringkegelradgetriebe (8a) im Eingriff steht und kinematisch mit dem hinteren Differential verbunden ist;
- Mittel für das Verbinden eines Antriebskegelrades (19) mit dem Ringkegelradgetriebe (8a) und für das Verbinden des anderen Antriebskegelrades (20) mit dem vorderen Differential (3); und
- Mittel für das Beschränken des relativen Gleitens der Vorderachse in Bezug auf die Hinterachse, und umgekehrt;
und bei dem das Selbstsperrdifferential (5a) in den Teil der Gangschaltung (9a) eingefügt ist, der üblicherweise für das vordere Differential bereitgestellt wird, während das vordere Differential in ein spezielles Gehäuse (9b) eingefügt ist, das an das Getriebe (9a) angrenzt und an diesem befestigt ist;
wobei das System **dadurch gekennzeichnet ist, dass** die Mittel für die Verbindung der Antriebskegelräder (19 und 20), eines (19) mit dem Träger (19b) des Ringkegelradgetriebes (8a) und das andere (20) mit dem Getriebezugträger (10) des vorderen Differentials (3), von zwei koaxialen Hohlwellen (19 a und 10a) gebildet werden, die an ihren Enden eine Auskehlung aufweisen, **dadurch**, dass die Mittel für das Verhindern des relativen Gleitens der zwei Achsen durch das Selbstsperrdifferential (5a) ausgebildet werden, und **dadurch**, dass für den Zweck der Vereinfachung der Konstruktion des Systems das vordere Differential (3) mit dem Kegelradgetriebe (8a) und das zentrale Differential (5a) in zwei einzelnen getrennten Gehäusen (9a, 9b) untergebracht sind, die aneinander befestigt sind.

2. Das System nach Anspruch 1, **dadurch gekennzeichnet, dass** das Selbstsperrdifferential vom Typ Torsen ist.

3. Das System nach Anspruch 1, **dadurch gekennzeichnet, dass** das Selbstsperrdifferential vom Typ Suretrac ist.

4. Das System nach Anspruch 1, **dadurch gekennzeichnet, dass** das Selbstsperrdifferential vom Typ Powr-Trak ist.

5. Das System nach Anspruch 1, **dadurch gekennzeichnet, dass** die Innenseite der Gehäuse (9a und 9b) durch einen Simmerring (40) getrennt wird.

6. Das System nach Anspruch 1, **dadurch gekennzeichnet, dass** zwischen dem Träger (19b) des Ringkegelradgetriebes (8a) und der Wand des Gehäuses (9b) ein Lager angeordnet ist, welches für die Verbesserung des Zentrierens des Ringkegelradgetriebes ausgelegt ist.

## Revendications

1. Système de transmission pour véhicules à moteur dans lequel le moteur et le dispositif de changement de vitesses sont placés dans une direction transversale par rapport à la direction de déplacement du véhicule, ledit système comprenant :
- un différentiel avant (3) ayant un support de train d'engrenages (10), entraîné par le pignon (4) de l'arbre secondaire du dispositif de changement de vitesses pour transférer le mouvement aux arbres de roue (6a, 6b) des roues avant du véhicule ;
- un différentiel arrière (7) pour transmettre le mouvement aux roues arrière du véhicule ;
- un différentiel central (5a) constitué par un différentiel à glissement limité, dans lequel :
a) le support de train d'engrenages (17) est fixé à la couronne (14), qui s'engrène avec le pignon (4) de l'arbre secondaire ; et
b) une grande couronne (19) est raccordée au support (19b) de la couronne conique (8a) pour la transmission à l'arrière, et l'autre grande couronne (20) est raccordée au support de train d'engrenages (10) du différentiel avant (3), lesdites grandes couronnes ayant différents diamètres et rainurage interne ;
- une couronne conique (8a), qui est fixée de manière rigide aux supports (19b et 11) ;
- un pignon conique (8b), qui s'engrène avec ladite couronne conique (8a) et est raccordé de manière cinématique au différentiel arrière ;
- des moyens pour raccorder une grande couronne (19) à la couronne conique (8a) et pour raccorder l'autre grande couronne (20) au différentiel avant (3); et
- des moyens pour limiter le glissement relatif de l'essieu avant par rapport à l'essieu arrière, et vice-versa ;
et dans lequel ledit différentiel à glissement limité (5a) est inséré dans la partie du dispositif de changement de vitesses (9a), qui est généralement fourni pour le différentiel avant, tandis que le différentiel avant est inséré dans un carter spécifique (9b), qui est adjacent et est fixé à la boîte de vitesses (9a) ;
ledit système étant **caractérisé en ce que** lesdits moyens pour raccorder les grandes couronnes (19 et 20), une (19) au support (19b) de la couronne conique (8a) et l'autre (20) au support de train d'engrenages (10) du différentiel avant (3), sont constitués par deux arbres creux coaxiaux (19a et 10a), qui sont rainurés au niveau de leurs extrémités, **en ce que** lesdits moyens pour empêcher le glissement relatif des deux essieux sont constitués par le différentiel à glissement limité (5a) et **en ce que**, dans le but de simplifier la construction du système, ledit différentiel avant (3) avec ladite couronne conique (8a) et ledit différentiel central (5a) sont contenus dans deux carters séparés individuels (9a, 9b) fixés ensemble.

2. Système selon la revendication 1, **caractérisé en ce que** le différentiel à glissement limité est du type Torsen.

3. Système selon la revendication 1, **caractérisé en ce que** le différentiel à glissement limité est du type Suretrac.

4. Système selon la revendication 1, **caractérisé en ce que** le différentiel à glissement limité est du type Power-Trak.

5. Système selon la revendication 1, **caractérisé en ce que** l'intérieur des carters (9a et 9b) est séparé par une bague d'étanchéité (40).

6. Système selon la revendication 1, **caractérisé en ce que** placé entre le support (19b) de la couronne conique (8a) et la paroi du carter (9b) se trouve un roulement conçu pour améliorer le centrage de la couronne conique.
